(19) Europäisches Patentamt

European Patent Office

Office européen des brevets

(11) EP 1 094 636 A1

(12) EUROPEAN PATENT APPLICATION

(43) Date of publication:
25.04.2001 Bulletin 2001/17

(51) Int Cl.⁷: H04L 12/28, H04Q 7/38

(21) Application number: 99440286.5

(22) Date of filing: 22.10.1999

(84) Designated Contracting States:
AT BE CH CY DE DK ES FI FR GB GR IE IT LI LU MC NL PT SE
Designated Extension States:
AL LT LV MK RO SI

(71) Applicant: ALCATEL
75008 Paris (FR)

(72) Inventor: Martin, Béatrice
75005 Paris (FR)

(74) Representative: Scheer, Luc et al
ALCATEL,
Intellectual Property Department,
Postfach 300 929
70449 Stuttgart (DE)

(54) Method for multiple-access communication

(57) The invention relates to a method for transmitting information blocks from a transmitter to a receiver (10) over a multiple access channel shared among a plurality of transmitters (11,12,13,14).

According to the invention, the transmitter selects an access slot, called reference access slot, among a set of available access slots to transmit a first information block. If the first information block is properly received by the receiver, the latter actualize the set of available access slots by excluding at least one access slot from the set of available access slots, where the excluded access slot is deduced from the reference access slot thanks to a predefined deterministic law.

In particular, once the terminal has detected that the first information block has been received by the receiver without collision, the terminal transmits further available information blocks in access slots deduced from the reference access slot thanks to the same predifined deterministic law as in the receiver.

Fig 1

EP 1 094 636 A1

**Description**

This invention relates to the field of telecommunications and more precisely to multiple-access communication method to access a channel shared among a plurality of transmitters which transmit information blocks to a receiver.

Slotted Aloha is a well-known multiple-access protocol which applies to radio-communication channels or local area networks. With this protocol, the channel is virtually divided in a succession of time slots called access slots. A pattern of a certain number of access slots forms a frame in which each access slot may be assigned a number. Each transmitter of a plurality of transmitters begins the transmission of an information block at the beginning of a randomly chosen access slot. If two or more transmitters choose the same access slot in the same frame to transmit an information block, the receiver detects a collision, and discards the contents of the access slot. If no collision is detected the receiver transmits an acknowledgement to the transmitter of the received information block. The transmitter waits for an acknowledgement to transmit further information blocks using the same method. If no acknowledgement is received within a predefined time period after the transmission of an information block, the transmitter retransmits this information block using the same method.

A disadvantage of this method is that the collision rate is the same for each information block. If a message is constituted of several information blocks, the collision rate at the message level is higher than for a message constituted by a single information block. The transmission of a message constituted of several information blocks may, as a consequence, be much slower than a short message, and block the transmitter in an intermediate state.

It is also known, in a radio communication system named TETRA, that a set of available access slots is communicated to the transmitter, which randomly chooses, among the available access slots, one access slot to transmit an information block. The set of available access slots is static and configured according to the processing power of the base station. The set of available access slots is broadcast on a broadcast channel to all transmitters present inside the cell controlled by the base station.

A particular object of the present invention is to adapt the "slotted Aloha" protocol to accelerate the transmission of a succession of information blocks waiting to be transmitted at a transmitter.

This object, and others that appear below, are achieved by a method according to claim 1, by a terminal according to claim 5 and by a station according to claim 6.

The present invention relates to a method for transmitting information blocks from a transmitter to a receiver over a multiple-access channel shared among a plurality of transmitters. A first information block is transmitted by using an access slot, called reference access slot, chosen among a set of available access slots known by the transmitter. If the first information block is received without collisions by the receiver, the receiver reserves at least a further access slot for at least a further information block possibly waiting for transmission at the transmitter. The reserved access slot is determined according to a predefined deterministic law known from the transmitter and the receiver. The receiver excludes the reserved access slot from the set of available access slots and broadcasts the new set of available access slots to the plurality of transmitters. When the transmitter detects that the first information block has been received by the receiver without collision, the transmitter transmits a further information block waiting for transmission in an access slot deduced from the reference access slot thanks to the predefined deterministic law. This access slot correspond to the access slot reserved by the receiver.

An advantage of the present invention is that only the first information block of several information blocks waiting for transmission is submitted to the same collision rate as in the "slotted Aloha" protocol. The further information blocks have lower collision rate and even null collision rate since they are transmitted by using access slots mentioned as reserved in the set of available access slot broadcast by the receiver.

Another advantage of the invention is that, in case of message segmented in several information blocks, the transmission time of the whole message is reduced compared to the time of transmission with "slotted Aloha" protocol. There is less waste of resources.

Other characteristics and advantages of the invention will appear on reading the following description of a preferred implementation given by way of non-limiting illustration, and from the accompanying drawings, in which:

Figure 1 shows a radio-communication system in which the method according to the present invention may be implemented;
Figure 2 shows a sequence of information blocks transmitted on a shared access channel according to the invention;
Figure 3 shows a block diagram of a terminal according to the invention;
Figure 4 represents a flow chart showing an implementation of the terminal showed in Figure 3;
Figure 5 shows a block diagram of a receiver according to the invention.

For convenience of the description, the invention will be described with reference to a mobile radio system but it is to be understood that the same theory applies to other multiple-access communication systems.

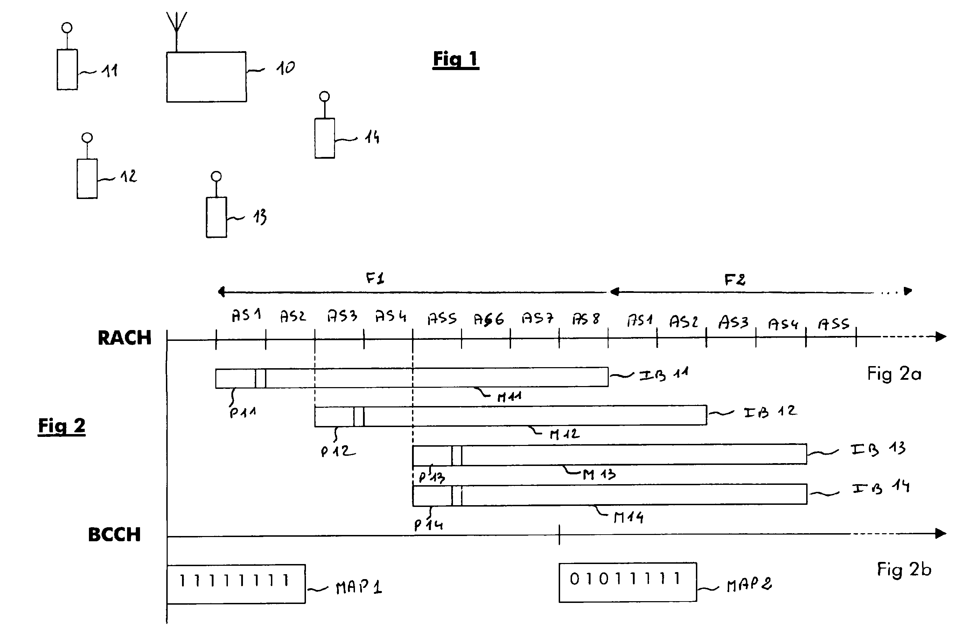

Figure 1 illustrates a radio-communication system comprising an access station 10 controlling a cell of the radio communication system and four mobile terminals 11, 12, 13, 14 located in a cell. The described system was chosen for sake of simplicity. The invention applies also to a radio-communication system comprising several access stations and any number of mobile terminals in each cell. In the following description, the radio-communication system is based on Code Division Multiple Access (CDMA) so that each mobile terminal 11,..., 14 uses a PN-sequence to spread the information it has to transmit. The invention would also apply to radio communication based on Time Division Multiple Access (TDMA) like GSM. The access station 10 might in other systems, where the invention would also apply, be moving, for example it is located on a satellite. The mobile terminal 11, 12, 13, 14 might in other systems, where the invention would also apply, be fixed terminal, for example in LAN.

For specific purpose, the mobile terminals 11,..., 14 have to use a channel time-shared among all the mobile terminals located in the cell. This channel may be called random access channel (RACH). Emergency calls, short message services, mobile terminal registration in the network or request for a dedicated channel are examples of situations where a mobile terminal has to access the RACH to transmit information blocks IB11,..., IB14 to the access station 10.

Figure 2a represents a random access channel RACH. The RACH supports a frame structure F1,F2. Each frame F1, F2 supports a slot structure defining a set of access slots AS1,..., AS8. The beginning of the different access slots AS 1,...; AS8 corresponds to well-defined time-offsets relative to the beginning of a frame F1, F2.

Mobile terminals 11,..., 14 transmit respectively information blocks IB11,..., IB14 in a randomly chosen access slot in the frame F1 of the RACH channel.

Mobile terminal 11 transmits information block IB11 in the access slot AS1
Mobile terminal 12 transmits information block IB12 in the access slot AS3
Mobile terminal 13 transmits information block IB13 in the access slot AS5
Mobile terminal 14 transmits information block IB14 in the access slot AS5

Each transmitted information block IB11,..., IB14 contains a preamble part P11,..., P14 comprising the PN-sequence used by the mobile terminal 11,..., 14 to spread their respective information blocks. The information block contains also a message part M11,..., M14.

The access station 10 has to identify the PN-sequence of a received information block, in order to despread the message parts M11,..., M14 of the information blocks IB11,...,IB14.

For an information block to be properly received at the access station 10, it must avoid collision with other information blocks. In case of CDMA, the criterion for a collision to happen is that at least two information blocks comprising the same PN-sequence are transmitted by using the same access slot. Information blocks IB11 and IB12 are transmitted without collision. On the contrary information blocks IB13 and IB14 collide in access slot AS5.

If two information blocks comprising different PN-sequences are transmitted by using the same access slot, the access station 10 is able to discriminate the two information blocks; it is not a case of collision. Since each mobile terminal chooses randomly its PN-sequence among a set of available PN-sequences broadcast by the access station 10 on a broadcast channel, collisions are likely to happen.

The size of an access slot must be at least as large as the size of the PN sequence. Indeed, a basic principle of CDMA is that, if the PN-sequence is properly received at the access station, the message part of the information block can be despread without problem, even if the message part itself is superposed with other information.

The access slot structure is known by each mobile terminal 11,..., 14 thanks to a signal indicating the beginning of a frame, broadcast by the access station 10 on a broadcast channel (BCCH).

The access station 10 broadcasts also on the BCCH a set of available access slots to prevent foreseeable collisions to happen. Figure 2b shows the structure of the BCCH. The time scale is the same as the one used for the RACH on figure 2a. The observation point for the RACH as well as for the BCCH is at the proximity of a mobile terminal. The set of available access slots may be transmitted on the BCCH in the form of a map MAP1, MAP2, which contains binary information indicating which access slots on the RACH channel are available in the next frame and which are reserved. The time interval between the transmission of MAP1 and MAP2 on the BCCH is equal as the time interval between two frames on the RACH. The first bit in map MAP1, MAP2 indicates, for example, if the first access slot of the next frame on the RACH is available or reserved, the nth. bit in map MAP1, MAP2 indicates if the nth access slot of the next frame on the RACH is available or reserved. A bit set to 0 may indicate that an access slot is reserved, a bit set to 1 that an access slot is available.

MAP1 contains the set of available access slots for frame F1. All bits are set to 1 that means that all access slots are available.

MAP2 contains the set of available access slots for frame F2. Bits 1 and bit 3 set to 0 mean that access slots AS1 and AS3 are reserved and not available for random access in frame F2. According to the invention, access slot AS1 in frame F2 (resp. access slot AS3) is reserved for mobile terminal 11 ( resp. mobile terminal 13) to transmit further information blocks (not represented on figure 2a). The other access slots are available for random access.

Another implementation may take into account that information blocks with different PN-sequences do not collide when transmitted by using the same access slot. The map may contain binary coded information indicating by which PN-sequence the different access slots in the current frame can be used or not.

Preferably, the set of available access slots MAP1, MAP2 have to be received at the beginning of the frame F1, F2 they refer to. So that the mobile terminals 11,..., 14 get the actualized set of available slots for the following frame at the right time. The time interval between the transmission of two sets of available access slots on the BCCH may preferably be smaller than the time interval between two frames on the RACH in order to compensate the transmission delay between the access station 10 and the mobile terminals 11,..., 14.

The above described map structure, map contents and map transmission are not limitive. Other possible implementations would also meet the same target. For example an incremental update of the map may be used. Instead of transmitting the whole map in each time interval, only the changes in the map between two time interval might be transmitted. The whole map might be only transmitted each N time intervals, where N is greater than 2. Such an implementation would enable it to send more often changes since changes would be shorter than a whole map. The set of available access slots would be more often actualized at the mobile terminals 11,..., 14.

The mobile terminal 11,..., 14 are informed if their information blocks IB11,..., IB14 have been received without collision at the access station 10.

In a first embodiment and as already described in "slotted Aloha" protocol, an acknowledgement (not represented on figure 2) may be transmitted on a specific channel, called paging channel, by the access station 10 to mobile terminals 11, 12 since information blocks IB11 and IB12 have been received at the access station 10 without collision. Since a collision happened to information blocks IB13 and IB14, no acknowledgement is transmitted to mobile terminals 13 and 14. Each time a mobile terminal 11,..., 14 transmits an information block on the RACH, it waits for an acknowledgement coming from the access station 10 before transmitting a following information block. If the mobile terminal 11,...,14 does not receive any acknowledgement within a predefined time period, noted Texp, it repeats the transmission of the not acknowledged information block. The number of retransmissions may also be limited. If the maximal number of retransmissions is exceeded, an access attempt failure is declared.

In another embodiment of the invention, an explicit acknowledgement of the information block may not be necessary to inform the mobile terminals 11,..., 14 if their information blocks IB11,..., IB14 have been received at access station 10 without collision. By checking the contents of the map MAP1, MAP2 broadcast on the BCCH, the mobile terminals may detect if the previous transmitted information block has been successfully received by the access station or not. For this purpose, the mobile terminal stores, as reference access slot, the randomly chosen access slot in which it has transmitted an information block. If the access slot deduced from the reference access slot thanks to the predefined deterministic law is set as reserved in the map received from the BCCH channel, the information block is implicitly acknowledged. In this embodiment of the invention, a paging channel only used for acknowledgement is no more useful.

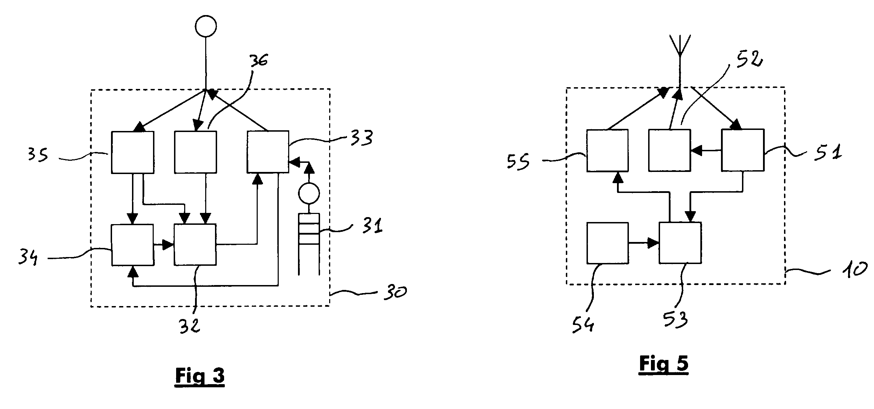

The following figures figure 3 to figure 5 refer to the embodiment of the invention in which acknowledgements are transmitted by the access station 10 to the mobile terminals 11,..., 14 to inform them if their information blocks have been received without collision.

Figure 3 represents a block diagram of a mobile terminal 30 supporting the characteristics of the present invention. The mobile terminal 30 comprises a transmit queue 31 in which information blocks waiting for transmission on the RACH are queued. The mobile terminal 30 comprises also selection means 32 to select an access slot in which the next information block will be sent on the RACH. Transmit queue 31 and selection means 32 are in relation with transmission means 33 dedicated to transmit the first information block waiting for transmission in the transmit queue 31 in the access slot selected by selection means 32 on the RACH. Selection means 32 are controlled by a timer 34, by acknowledgement handler 35 handling acknowledgements of properly transmitted information blocks and by map storing means 36 for storing a map received on the BCCH containing a set of available access slots. Timer 34 is controlled by transmission means 33 and by acknowledgement handler 35.

Mobile terminal 30 may be characterized by supporting two access modes. One possible access mode is called random access, the other access mode is called implicit reservation access. The access mode may be stored in a memory location at mobile terminal 30.

Random access means that the mobile terminal 30 transmits a information block, waiting for transmission in transmit queue 31, in an access slot randomly chosen by selection means 32 among the access slots marked as available in the latest map received by mobile terminal 30 on the BCCH and stored in map storing means 36. The chosen access slot is stored in a memory location at the mobile terminal 30 and called reference access slot in the following description. The default access mode for the mobile terminal 30 is random access.

Implicit reservation access means that a predefined deterministic law is used by selection means 32 to select the access slot in which the next information block waiting for transmission in transmit queue 31 will be transmitted.

A possible predefined deterministic law may be to transmit the further information block in the access slot of the current frame with the same number as the reference access slot.

Another predefined deterministic law may be to transmit a further information block in an access slot, called reserved_access_slot defined as follows:

$$\text{reserved\_access\_slot} = (\text{reference access slot} + k\,)\bmod\,(n)$$

where $0<k<n$ and n is the number of access slots in a frame. This law can be called "access slot hopping reservation law".

Other kinds of predefined deterministic laws may also be used provided they are know at both the mobile terminals and the access base.

Selection means 32 comprise a first memory location to store the contents of the information block to transmit, a second memory location to store the current access mode of the terminal, a third memory location to store the reference access slot, a fourth memory location to store the random law to select an access slot and a fifth memory location to store the predefined deterministic law. Selection means 32 comprise a processor to determine according to an algorithm and to the values of the different memory locations which access slot will be used to transmit the next information block.

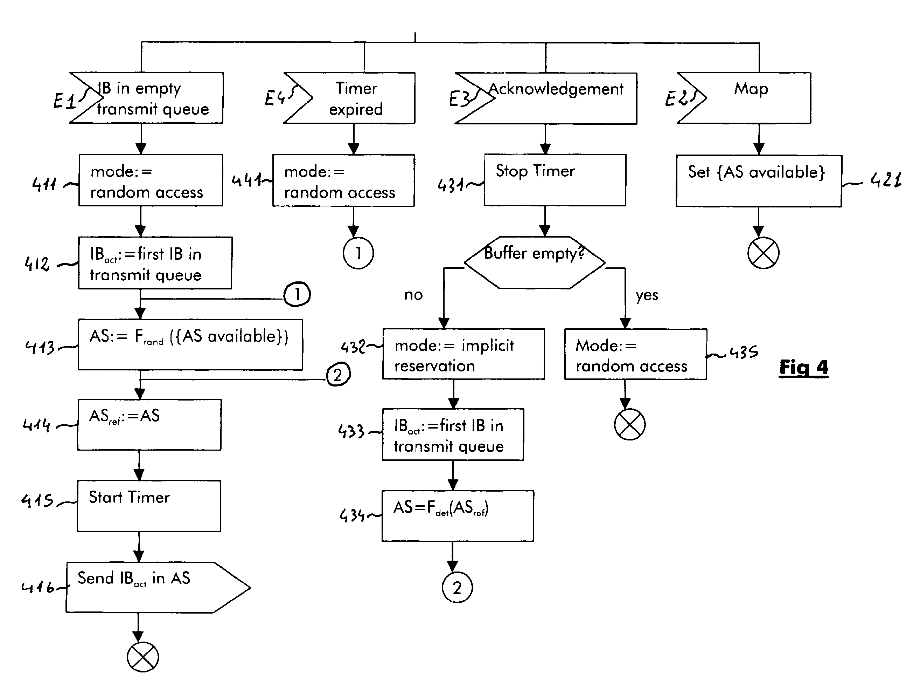

Figure 4 shows a possible implementation of the mobile terminal 30 as an event-driven machine. There may be four events that are processed by the mobile terminal. While waiting for a new event, the mobile terminal is in idle state.

Event E1: The reception of information blocks in the transmit queue 31 which was empty before.
Event E2: The reception of a map containing a set of available access slots by map storing means 36.
Event E3: The reception of an acknowledgement by acknowledgement handler 35.
Event E4: The expiration of timer 34

E1: When information blocks are queued in the transmit queue 31 that was empty before, the access mode is set to random access (Step 411), the first information block waiting for transmission in the transmit queue 31 is selected as information block to transmit (Step 412). An access slot is selected thanks to the random law among the set of available access slots (Step 413). This selected access slot is stored as reference access slot in the appropriate memory location (Step 414). The timer 31 is started (Step 415) and the information block to transmit is transmitted in the selected access slot by transmission means 33 (Step 416). The mobile terminal returns in the idle state.

E2: When a new map containing an updated set of available access slots is received from the BCCH, this new map is stored in map storing means 36 (Step 421) and the mobile terminal returns to the idle state.

E3: When an acknowledgement is received by acknowledgement handler 35, the timer 34 is reset (Step 431). If subsequent information blocks are waiting for transmission in the transmit queue 31, the access mode is set to implicit reservation access (Step 432). The information block to transmit is hold from the transmit queue 31 (Step 433). The access slot used to transmit the information block is deduced from the reference access slot thanks to the predefined deterministic law noted Fdet (Step 434) Steps 414 to 416 are executed and the mobile terminal returns to idle state.

If the transmit queue is empty the access mode is also set back to random access (Step 435). The mobile terminal returns in idle state.

E4: When no acknowledgement is received within the predefined time period, the timer 34 expires, the access mode is set back to random access (Step 441). Steps 413 to 416 are executed and the mobile terminal returns to idle state.

A counter at the mobile terminal might also count the number of successive information blocks transmitted in access mode implicit reservation access. When the counter reaches a predefined maximum value, the access mode may also be set back to random access.

Figure 5 represents an example of a block diagram of the access station according to the invention. The access station 10 comprises an information block receiver 51 connected to an acknowledgement transmitter 52. The information block receiver 51 is connected to a map handler 53 for handling the set of available slots in the next X frames. A timer 54 controls the map handler 53 so that at regular time intervals, the map corresponding to the next frame provided by the map handler 53 is transmitted by the map transmitter 55 on the BCCH.

The map handler 53 only modifies the map of available access slots when an information block is received without collision in an access slot, called reference2 access slot. The access station 10 disposes of the same predefined deterministic law as the mobile terminal. The map handler set the access slots, deduced thanks to the predefined deterministic law from the reference2 access slot, as reserved in the X next frames, where X is a predefined number. The map handler has the capacity to store maps for the X next frames and actualizes the maps each time an information block is received without collision. X may be equal to 1, however it may be interesting that X is greater or equal to two.

A specific usage of the present invention may be to transmit efficiently, from mobile terminals, messages which have to be segmented in several information blocks because they are too long to be transmitted in a single access slot. In that case, the parameter X should correspond to the average number of segments of a message. This may be an operator parameter implemented as well in the mobile terminals as in the access station. This parameter may also be indicated by the mobile terminal to the access station in the first transmitted information block.

An access slot as reserved in the map broadcast to the mobile terminal, will not be used by mobile terminals which are in random access mode.

A mobile terminal 30, whose information block has been acknowledged by the access station 10, and which has turned to access mode implicit reservation access, needs not to check the map. This mobile terminal 30 needs not to be explicitly informed about the access slot reserved for him by the access station 10. Indeed, the reception of an acknowledgement for the previous transmitted information block and a transmit queue containing further information blocks to transmit are a sufficient condition to determine the access slot in the next frame without taking into account the map broadcast on the BCCH.

If the access station 10 receives no information block in a reserved access slot, it should mean that although an access slot has been reserved for a mobile terminal, this mobile terminal has no further information blocks to send; its transmit queue 31 is empty. In such a case, the map handler 53 may, as a consequence, set the access slot reserved in the following frames as again available.

The present invention may also be used for access to a time-shared channel in TDMA systems, for example GSM. In that case, the size of an information block must be at most as large as the size of the access slot. In that case, there is also no possibility to use PN-sequence, then, the condition for a collision to happen is that two mobile terminals use the same access slot to transmit information blocks.

This invention may also be used in wired networks like Local Area Networks using "slotted Aloha" based access protocols.

The described solution may be in a first step only applied to the mobile terminals. The access station might not support the features to actualize a map indicating which access slots are reserved. In that case there won't be any reduction of collision on the RACH. However, it allows, in further steps, a progressive adaptation of the network. The mobile terminal may support the new features according to the invention although the access station does not already.

**Claims**

1. A method for transmitting information blocks from a transmitter, called accessing transmitter, to a receiver over a multiple-access channel shared among a plurality of transmitters, said channel being divided in access slots, said method comprising the steps of:

   - broadcasting by said receiver to said plurality of transmitters a set of available access slots;
   - transmitting from said accessing transmitter to said receiver a first information block by using a reference access slot chosen among said set of available access slots,
   - informing said accessing transmitter, if said first information block has been received without collision by said receiver,

   said method being characterized in that, if said first information block has been received without collision at said receiver, it further comprises the steps of:

   - signaling by said receiver to said plurality of transmitters, that at least one access slot, called reserved access slot, is excluded from the set of available access slots, where said reserved access slot is deduced from said reference access slot thanks to a predefined deterministic law;
   - transmitting from said accessing transmitter to said receiver a further information block, if available, by using said reserved access slot.

2. A method according to claim 1, characterized in that said receiver is a station controlling a cell of a radio communication system, said transmitter being a mobile terminal located in said cell and said multiple-access channel being a random access radio-communication channel.

3. A method according to claim 1, characterized by further comprising the step of signaling by said receiver to said plurality of transmitters that remaining reserved access slots reserved for said accessing transmitter are again available, if one reserved access slot is not used by said accessing transmitter.

4. A method according to claim 1, characterized in that said predefined deterministic law is defined as follows:

- the space between a first reserved access slot and said first access slot is equal to a predefined number of access slots,
- the space between any further reserved access slot and its previous reserved access slot is equal to said predefined number of access slots.

5. A terminal for transmitting information blocks to a receiver over a multiple access channel shared among a plurality of terminals, said channel being divided in access slots, said terminal comprising:

- means for transmitting a first information block in a reference access slot chosen among a set of available access slots,
- means for receiving an indication, if said first information block has been received without collision by said receiver,

said terminal being characterized by further comprising means for deducing from said reference access slot at least one further access slot thanks to a predefined deterministic law, said further access slot being used to transmit a further available information block, if said first information block has been received without collision by said receiver.

6. A station for receiving information blocks from a plurality of transmitters over a multiple-access channel, said station comprising:

- means for broadcasting to said transmitters a set of available access slots
- means for checking, if a collision has happened in an access slot, called reference access slot,

said station being further characterized in comprising means for modifying said set of available access slots by excluding at least one access slot, called reserved access slot, from said set of available access slots, said reserved access slots being deduced from said reference access slot thanks to a predefined deterministic law, if no collision has happened in said reference access slot.

7. A station according to claim 6, characterized in that it is an access station controlling a cell of a radio communication network.

EP 1 094 636 A1

**Fig 1**

**Fig 2**

Fig 2a

Fig 2b

Fig 5

Fig 3

E1 — IB in empty transmit queue

E4 — Timer expired

E3 — Acknowledgement

E2 — Map

411 — mode:= random access

441 — mode:= random access

431 — Stop Timer

421 — Set {AS available}

412 — $IB_{act}$:=first IB in transmit queue

(1)

(1)

Buffer empty?

no — 432 — mode:= implicit reservation

yes — 435 — Mode:= random access

413 — AS:= $F_{rand}$ ({AS available})

(2)

414 — $AS_{ref}$:=AS

433 — $IB_{act}$:=first IB in transmit queue

415 — Start Timer

434 — AS=$F_{det}$($AS_{ref}$)

416 — Send $IB_{act}$ in AS

(2)

**Fig 4**

**European Patent Office**

# EUROPEAN SEARCH REPORT

Application Number

EP 99 44 0286

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 420 864 A (DAHLIN JAN ERIK AAKE ST ET AL) 30 May 1995 (1995-05-30)<br>* abstract *<br>* column 1, line 6 - column 2, line 41 *<br>* column 3, line 3 - column 5, line 54 *<br>--- | 1-7 | H04L12/28<br>H04Q7/38 |
| X | WO 98 37669 A (ERICSSON TELEFON AB L M) 27 August 1998 (1998-08-27)<br>* abstract *<br>* page 1, line 2 - page 4, line 9 *<br>* page 6, line 9 - page 11, line 14 *<br>* page 15, line 27 - page 18, line 2 *<br>--- | 1-7 | |
| X | WO 95 16330 A (ERICSSON TELEFON AB L M) 15 June 1995 (1995-06-15)<br>* page 1, line 4 - page 7, line 13 *<br>* page 10, line 26 - page 11, line 18 *<br>* page 30, line 25 - page 31, line 14 *<br>* page 32, line 23 - page 33, line 11 *<br>* page 35, line 9 - line 30 *<br>* page 36, line 10 - line 14 *<br>--- | 1-7 | |
| X | EP 0 687 078 A (NOKIA MOBILE PHONES LTD) 13 December 1995 (1995-12-13)<br>* column 1, line 1 - column 5, line 3 *<br>* column 5, line 55 - column 8, line 40 *<br>* column 9, line 10 - column 11, line 32 *<br>* claims 1,3-6 *<br>--- | 1-4,6,7 | TECHNICAL FIELDS SEARCHED (Int.Cl.7)<br><br>H04L<br>H04Q |
| X | US 4 736 371 A (TEJIMA SHUNICHIRO ET AL) 5 April 1988 (1988-04-05)<br>* abstract *<br>* column 1, line 7 - column 2, line 68 *<br>* column 3, line 67 - column 5, line 12 *<br>* column 7, line 64 - column 8, line 39 *<br>* claims 1,3,10,15 *<br>---<br>-/-- | 1-4,6,7 | |

The present search report has been drawn up for all claims

| Place of search | Date of completion of the search | Examiner |
|---|---|---|
| THE HAGUE | 11 April 2000 | Vaskimo, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 99 44 0286

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | ANDREW S. TANENBAUM: "Computer Networks" 1993 , PRENTICE-HALL INTERNATIONAL EDITIONS , ENGLEWOOD CLIFFS, US XP002135423  196050 * page 179, paragraph 3.6.3. - page 188, paragraph 3.8. * | 1-7 | |
| | | | **TECHNICAL FIELDS SEARCHED (Int.Cl.7)** |

The present search report has been drawn up for all claims

| Place of search | Date of completion of the search | Examiner |
|---|---|---|
| THE HAGUE | 11 April 2000 | Vaskimo, K |

EPO FORM 1503 03.82 (P04C01)

**EP 1 094 636 A1**

| Patent document cited in search report | | | Publication date | Patent family member(s) | | Publication date |
|---|---|---|---|---|---|---|
| US 5420864 | A | | 30-05-1995 | SE | 500565 C | 18-07-1994 |
| | | | | AU | 678919 B | 12-06-1997 |
| | | | | AU | 4070695 A | 04-04-1996 |
| | | | | AU | 667998 B | 18-04-1996 |
| | | | | AU | 5379594 A | 24-05-1994 |
| | | | | BR | 9305692 A | 24-12-1996 |
| | | | | CN | 1088378 A,B | 22-06-1994 |
| | | | | EP | 0623263 A | 09-11-1994 |
| | | | | EP | 0907264 A | 07-04-1999 |
| | | | | FI | 943052 A | 23-06-1994 |
| | | | | JP | 7502874 T | 23-03-1995 |
| | | | | MX | 9306347 A | 29-04-1994 |
| | | | | NZ | 257411 A | 24-02-1997 |
| | | | | NZ | 280819 A | 24-02-1997 |
| | | | | SE | 9203127 A | 27-04-1994 |
| | | | | WO | 9410767 A | 11-05-1994 |
| | | | | SG | 43757 A | 14-11-1997 |
| WO 9837669 | A | | 27-08-1998 | AU | 6315498 A | 09-09-1998 |
| WO 9516330 | A | | 15-06-1995 | AU | 675898 B | 20-02-1997 |
| | | | | AU | 1251595 A | 27-06-1995 |
| | | | | CA | 2153871 A | 15-06-1995 |
| | | | | CN | 1117335 A | 21-02-1996 |
| | | | | EP | 0683963 A | 29-11-1995 |
| | | | | FI | 953775 A | 09-08-1995 |
| | | | | JP | 8506713 T | 16-07-1996 |
| | | | | SG | 43755 A | 14-11-1997 |
| | | | | US | 5590133 A | 31-12-1996 |
| EP 0687078 | A | | 13-12-1995 | FI | 942702 A | 09-12-1995 |
| | | | | CN | 1115164 A | 17-01-1996 |
| | | | | JP | 7336774 A | 22-12-1995 |
| | | | | US | 5729541 A | 17-03-1998 |
| US 4736371 | A | | 05-04-1988 | JP | 1704659 C | 27-10-1992 |
| | | | | JP | 3062329 B | 25-09-1991 |
| | | | | JP | 62168435 A | 24-07-1987 |
| | | | | JP | 1704660 C | 27-10-1992 |
| | | | | JP | 3062330 B | 25-09-1991 |
| | | | | JP | 62199129 A | 02-09-1987 |
| | | | | JP | 1803569 C | 26-11-1993 |
| | | | | JP | 5013409 B | 22-02-1993 |
| | | | | JP | 63009322 A | 16-01-1988 |
| | | | | JP | 1704657 C | 27-10-1992 |
| | | | | JP | 3062328 B | 25-09-1991 |

**ANNEX TO THE EUROPEAN SEARCH REPORT
ON EUROPEAN PATENT APPLICATION NO.**

EP 99 44 0286

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2000

| Patent document cited in search report | Publication date | Patent family member(s) | | Publication date |
|---|---|---|---|---|
| US 4736371 A | | JP | 62157428 A | 13-07-1987 |
| | | AU | 582723 B | 06-04-1989 |
| | | AU | 6705986 A | 02-07-1987 |
| | | CA | 1261080 A | 26-09-1989 |
| | | DE | 3688732 A | 26-08-1993 |
| | | DE | 3688732 T | 27-01-1994 |
| | | EP | 0228709 A | 15-07-1987 |

EPO FORM P0459

For more details about this annex : see Official Journal of the European Patent Office, No. 12/82